(19) Europäisches Patentamt
European Patent Office
Office européen des brevets

(11) **EP 4 538 743 A1**

(12) **EUROPEAN PATENT APPLICATION**

(43) Date of publication:
**16.04.2025 Bulletin 2025/16**

(21) Application number: **23202987.6**

(22) Date of filing: **11.10.2023**

(51) International Patent Classification (IPC):
**G01S 13/58** (2006.01)     **G01S 13/34** (2006.01)
**G01S 13/931** (2020.01)

(52) Cooperative Patent Classification (CPC):
**G01S 13/931; G01S 13/343; G01S 13/347; G01S 13/584**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **ZF Friedrichshafen AG**
  **88046 Friedrichshafen (DE)**
• **ZF Autocruise France SAS**
  **29200 Brest (FR)**

(72) Inventors:
• **Sun, Kaipeng**
  **88046 Friedrichshafen (DE)**
• **Su, Xiao**
  **88046 Friedrichshafen (DE)**
• **Cousin, Brandon**
  **29200 Brest (FR)**

(54) **AUTOMOTIVE RADAR SENSOR**

(57)    The present invention proposes an automotive radar sensor comprising transmitting means, receiving means, and control and processing units, wherein the transmitting means emits a sequence of frequency modulated pulses, where at each pulse, its carrier frequency is configurable and set by the control unit, which also configures a time interval between any two consecutive pulses in the pulse sequence according to the carrier frequency being used, the receiving means receives the signal reflected by objects in radar sensor's surroundings, mixes the signal to baseband, and converts the signal to digital signal by ADC converters, and the processing unit processes the digital signal by performing spectral analysis, and produces detections for the objects in the surroundings, wherein detection attributes are estimated by converting the results of spectral analysis to physical values by removing the range dependency in slow-time signal induced by the varying carrier frequency at each chirp in order to produce a range independent velocity attribute.

Fig. 2

EP 4 538 743 A1

**Description**

The present invention refers to an automotive radar sensor, in which a method for optimizing stepped FMCW-radar modulation scheme and sub-methods to provide radar detection attributes for automotive applications is executed.

Modern vehicles (cars, trucks etc.) are equipped with multiple sensors, which provide information to the driver and which also control functions of the vehicle at least in a partly automated manner. An important sensor principle for environment detection is radar. In-vehicle radar sensors typically comprise transmitting and receiving elements, which generate data channels of the radar sensor (Rx/Tx-antenna pairs). In each receiving channel a down-mixing to the baseband as well as a filtering occurs, followed by a digitalization of the such received band signal. By processing of the base band signals for all receiving channels, a detection and localization of a target object in a field of view of the radar sensor can be achieved.

Most of the radar sensors used in automotive environment are FMCW (Frequency Modulated Continuous Wave) radar sensors (also called chirp sequence radar sensors), which send several frequency modulated pulses in each radar measurement cycle. Object or scene attributes such as range, velocity, and angular positions can be estimated by applying several Fourier transformations, a beamforming and/or an optimal filtering on the base band data.

Conventional FMCW modulation transmits all chirps in a radar cycle with the same carrier frequency, under which the range resolution depends solely on the swept bandwidth at each chirp (also called fast-time bandwidth afterwards). Improving range resolution requires increasing fast-time bandwidth. If the maximum detection range is fixed, the ADC (ADC = Analog-Digital-Converter) sampling rate shall be increased to cover the correspondingly increased maximum beat frequency, which increases the cost for a higher performance ADC device. If the ADC sampling rate is fixed, the maximum detection range must be reduced to avoid aliasing.

The trade-off among range resolution, ADC sampling rate, and maximum detection range can be solved by varying the carrier frequency at each chirp. In particular, if the carrier frequency changes linearly across all chirps in a radar cycle, the frequency of the slow-time signal will be dependent upon both range and velocity of the reflecting radar target in the scene. The maximum detection range is still determined by the individual fast-time chirps, thus will not be influenced by the varying carrier frequencies. Meanwhile, two targets closely located in range can now be resolved either in fast-time or slow-time spectral analysis. If the slow-time bandwidth, i.e., the overall carrier frequency changes in a radar cycle, is higher than the fast-time chirp bandwidth, a better range resolution can be achieved (in slow-time) without sacrificing maximum detection range nor altering ADC sampling rate.

Although other carrier frequency stepping schemes can provide some additional features to radar, e.g., a better interference tolerance, the linear stepping scheme requires the minimum changes to the signal processing methods used in conventional FMCW radar, thus is mostly adopted. However, linearly varying carrier frequency also raises two issues compared to FMCW radar, i.e., an additional phase term that changes quadratically with (slow) time and the coupling of range and velocity in the attributes of detection output.

This invention aims to address both issues, thus provides a full solution to stepped FMCW radar.

The first issue of second- order phase term will deteriorate signal SNR (SNR = Signal-to-Noise-Ratio) especially for targets with high relative velocities. Regarding this issue, several methods have already been proposed, such as e.g. in US 11,199 617 B2 or in WO 2022/033 639 A1, which will be addressed later. However, there is still optimization potential of signal processing for radar detection.

To solve this object, the present invention proposes an automotive radar sensor comprising transmitting means, receiving means, and control and processing units, wherein the transmitting means emits a sequence of frequency modulated pulses, where at each pulse, its carrier frequency is configurable and set by the control unit, which also configures a time interval between any two consecutive pulses in the pulse sequence according to the carrier frequency being used, the receiving means receives the signal reflected by objects in radar sensor's surroundings, mixes the signal to baseband, and converts the signal to digital signal by ADC converters, and the processing unit processes the digital signal by performing spectral analysis, and produces detections for the objects in the surroundings, wherein detection attributes are estimated by converting the results of spectral analysis to physical values by removing the range dependency in slow-time signal induced by the varying carrier frequency at each chirp in order to produce a range independent velocity attribute.

In an embodiment, the dependency on the chirp index of the second order phase term in slow-time phase component of the down-mixed returned radar signal is removed by varying the pulse repetition time for each chirp in a radar cycle such that the product of the center frequency at the m-th chirp and the total time elapsed from start of the radar cycle to the start of the m-th chirp is set equal to the product of a constant and the chirp index, leading to the slow-time phase component $\varphi_D(l,m) = \dfrac{4\pi}{c}\left(f_{c,0} \cdot R + \Delta f_c \cdot R \cdot m + Q_c \cdot v \cdot m\right)$, where c= light speed, R=range, $\Delta f_c$= constant shift of carrier frequency, m= chirp index, v= velocity, $f_{c,1}$=center frequency at 1St chirp , $T_{r,0}$ = pulse repetition time at 0th chirp.

In an embodiment, an independent velocity estimate is done by the processing-unit by converting the range estimate into the corresponding slow-time frequency calculating the maximum unambiguous frequency in slow-time by calculating modulo, shift the slow-time peak frequency by removing the above modulo result of and compensating the shifted frequency by adding the maximum unambiguous frequency, if the above shifted frequency is moved outside of the slow-time unambiguous interval by the above step.

Further proposed is a vehicle, comprising at least one radar sensor as described.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention.

In the accompanying drawings:

Figure 1 shows a chirp sequence modulation with linear increasing center frequencies according to prior art;

Figure 2 shows the SNR drop with increasing velocity for a constant pulse repetition time.

Figure 3 shows an example of the most important features of a radar system according to an embodiment of the invention.

While the present disclosure is subject to various modifications and alternative forms, specific embodiments thereof have been shown by way of example in the drawings and will herein be described in detail. The invention should be understood to not be limited to the particular forms disclosed, but on the contrary, the intention is to cover all modifications, equivalents, and alternatives falling within the spirit and scope of the present disclosure.

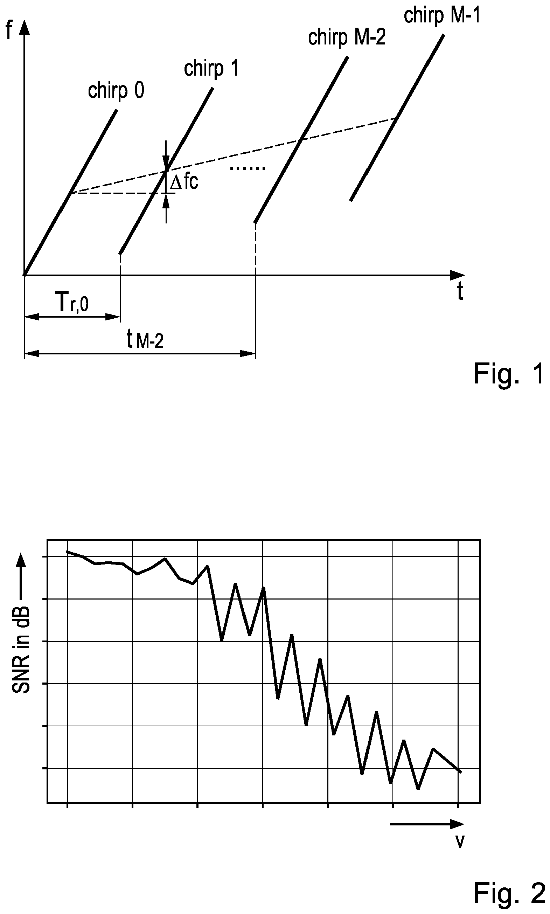

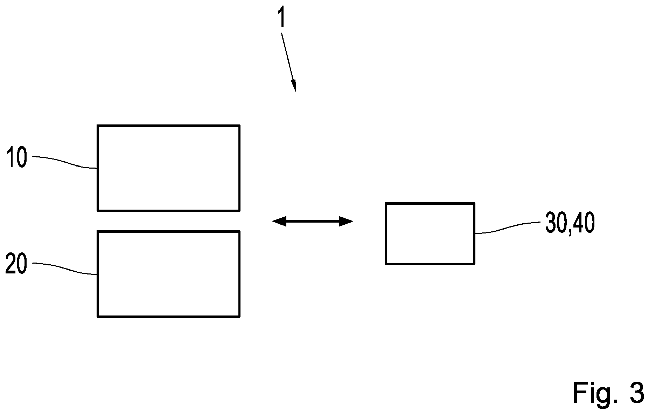

As any radar sensor 1, a radar sensor 1 according to the present invention comprises transmitting means 10, receiving means 20, and control units 30 and processing units 40, as schematically indicated in Figure 3. The transmitting means 10 emits a sequence of frequency modulated pulses, where at each pulse, its carrier frequency is configurable and set by the control unit 30, which also configures a time interval between any two consecutive pulses in the pulse sequence according to the carrier frequency being used. The receiving means 20 receives the signal reflected by objects in radar sensor's 1 surroundings, mixes the signal to baseband, and converts the signal to digital signal by ADC converters. The processing unit 40 processes the digital signal by performing spectral analysis, and produces detections for the objects in the surroundings. According to the invention, the detection attributes are estimated by converting the results of spectral analysis to physical values by removing the range dependency in slow-time signal induced by the varying carrier frequency at each chirp in order to produce a range independent velocity attribute, as described hereinafter with reference to Figures 1 and 2.

Figure 1 shows a diagram (frequency over time) with chirps according to a stepped FMCW, also denoted as SFMCW. Here, the signal frequency of a target with $(R,v)$ has coupled range $R$ and velocity $v$ in slow-time dimension. As is known to a skilled person, the FMCW-radar signal model for stepped FMCW (also denoted as SFMCW) radar is as follows: After mixing-up to radio frequency, the emitted signal $s_t(t,m)$ of the m-th chirp is:

$$s_t(t,m) = \cos\left(\pi \frac{B_e}{T_c} t^2\right) \cos(2\pi f_{c,m} t) \tag{1},$$

where the center frequency $f_{c,m}$ of the m-th chirp is configured to:

$$f_{c,m} = f_{c,0} + m \cdot \Delta f_c \tag{2}$$

where $\Delta f_c$ is the constant shift of the carrier frequency of a chirp (because of the stepped FMCW radar), as shown in Figure 1.

The received signal $s_r(t,m)$ is:

$$s_r(t,m) = \cos\left(\pi \frac{B_e}{T_c} (t - \tau_m)^2\right) \cos\left(2\pi f_{c,m}(t - \tau_m)\right) \tag{3}$$

The time delay $\tau_m$, i.e. the time elapsed from the beginning of the Radar cycle to the start of the m-th chirp, for a target in the scene at the m-th chirp is:

$$\tau_m = \frac{2}{c}(R + v \cdot t_m) \tag{4}$$

After complex down-mixing of the returned signal $s(l,m)$, the I-th sample of the m-th chirp is formulated as:

$$s(l,m) = e^{j\pi \frac{B_e}{T_c}(2\Delta t \cdot l \cdot \tau_m + \tau_m^2)} \cdot e^{j2\pi f_{c,m}\tau_m} = e^{j\varphi_R(l,m)} \cdot e^{j\varphi_D(l,m)} \tag{5}$$

The phase term containing $\tau_m^2 = \frac{4}{c^2}(R + v \cdot t_m)^2$ is negligible due to the denominator $c^2$ (lightspeed). Thus, the remaining phase term is:

$$\varphi_R(l,m) = 2\pi \frac{B_e}{T_c}\Delta t \cdot l \cdot \tau_m = \frac{4\pi}{c}\frac{B_e}{T_c}(R + v \cdot t_m)\Delta t \cdot l \tag{6}$$

The phase term of the second term above (see (5)):

$$\varphi_D(l,m) = 2\pi f_{c,m}\tau_m = \frac{4\pi}{c}\left(f_{c,0}R + f_{c,0} \cdot v \cdot t_m + R \cdot \Delta f_c \cdot m + v \cdot t_m \cdot \Delta f_c \cdot m\right) \tag{7}$$

When configured with constant PRT, i.e. $t_m = T_r \cdot m$, above phases can be re-organized to:

$$\begin{cases} \varphi_R(l,m) = \frac{4\pi}{c}\frac{B_e}{T_c}(R + v \cdot T_r \cdot m) \cdot \Delta t \cdot l \\ \varphi_D(l,m) = \frac{4\pi}{c}\left(f_{c,0}R + f_{c,0} \cdot v \cdot T_r \cdot m + R \cdot \Delta f_c \cdot m + v \cdot T_r \cdot \Delta f_c \cdot m^2\right) \end{cases} \tag{8}$$

In $\varphi_R(l,m)$, the term $v \cdot T_r \cdot m$ is usually comparably small compared to R and should only have influence under a configuration with a very long slow-time observation, i.e., a very large M (total amount of chirps), or for targets moving with very high (relative) velocity v. This term is often negligible in automotive applications and is also not addressed herein.

Applying DFT along fast-time dimension, the following spectrum results:

$$S_R(l_f,m) = \sum_{l=0}^{L-1} s(l,m)e^{-j2\pi\frac{l_f}{L}l} \tag{9}$$

This will reveal the beat frequency $l_{f,peak}$ that corresponds to the distance R of an underlying target in the scene:

$$l_{f,peak} \approx \frac{2}{c}\frac{B_e}{T_c}\Delta t \cdot R \tag{10}$$

In $\varphi_D(l,m)$, the first term $f_{c,0}R$ is a constant and will not contribute to frequency estimation. The last term $v \cdot T_r \cdot \Delta f_c \cdot m^2$ changes quadratically with chirp index m and has a nonlinear behavior with respect to m.

As can be seen in Figure 2, which shows the target SNR (y-axis) over the relative velocity (in km/h) for a constant PRT, the influence of $m^2$ is negligible for (relative) velocities of v=0 or even low velocities. However, compared to the second term $f_{c,0} \cdot v \cdot T_r \cdot m$, although $f_{c,0}$ is usually orders of magnitude greater than $\Delta f$, the factor $m^2$ will cause a non-negligible and non-linear phase change for higher velocities. This can also be seen in Figure 2, where a significant SNR decrease at high velocities v can be seen. Thus, the Doppler spectrum will be smeared.

Applying FFT along slow-time m:

$$S_{R,D}\left(l_f, m_f\right) = \sum_{m=0}^{M-1} S_R\left(l_f, m\right) e^{-j2\pi\frac{m_f}{M}m} \qquad (11)$$

the result spectrum $S_{R,D}(l_f, m_f)$ will be distorted by this second order term. Thus, it needs to be handled.

As already initially mentioned, there are already several methods that try to improve signal processing of radar sensors 1. In US 11,199 617 B2, a method is described that tries to eliminate the second-order phase term in the slow-time dimension and thus the squared dependency on the actual chirp m.

Here, a constraint $f_{c,m} \cdot T_{r,m} = const$ is inserted to $\varphi_D(l,m)$, which leads to:

$$\varphi'_D(l,m) = \frac{4\pi}{c}\left(f_{c,0}R + R \cdot \Delta f_c \cdot m + v \cdot const \cdot m\right)$$

Here, an issue arises that above formulation of $\varphi_D$ is derived by assuming $t_m = T_r \cdot m$, where $T_r$ is already set to constant. But the constraint $f_{cm} \cdot T_{r,m} = const$ requires that the PRT $\quad T_{r,m} = \dfrac{const}{(f_{c,0}+\Delta f_c \cdot m)}\quad$ to be varying, which, conflicts with the original assumption that the PRT (phase repetition time) $T_{r,m}$ is constant.

This assumption needed revision. In WO 2022/033 639 A1, an improved method has been suggested, which takes into account that the PRT $T_{r,m}$ varies with chirp index m. Here, the time $t_m$ is computed by a complex series expansion, which also takes several simplifications. This application is taken as basis for the present invention, which optimizes the method.

Hence, an improved method needed to be found, which is easier to process.

According to the invention, a constant is $Q_c$ is introduced in order to eliminate the second-order phase term in the slow-time dimension of equation (7), i.e. in term

$$\varphi_D(l,m) = \frac{4\pi}{c}\left(f_{c,0}R + f_{c,0} \cdot v \cdot t_m + R \cdot \Delta f_c \cdot m + v \cdot t_m \cdot \Delta f_c \cdot m\right)$$

By combining the terms dependent on '$v \cdot t_m$', the phase $\varphi_D(l,m)$ above can be re-formulated to

$$\varphi_D(l,m) = \frac{4\pi}{c}\left(f_{c,0}R + R \cdot \Delta f_c \cdot m + v \cdot t_m \cdot \left(f_{c,0} + \Delta f_c \cdot m\right)\right) \qquad (12)$$

It has been found that under arbitrary $T_{r,m}$, the total elapsed time $t_m$ at the $m$-th chirp is the sum of all previous PRTs:

$$t_m = \sum_{j=0}^{m} T_{r,j-1} \qquad (13),$$

Where $T_{r,-1} = 0$ is introduced for convenience and simplification.

Further, the following constraint is applied:

$$Q_c \cdot m = f_{c,m} \cdot t_m = f_{c,m} \cdot \sum_{j=0}^{m} T_{r,j-1} \qquad (14),$$

where $Q_c$ is a constant and is equal to:

$$Q_c = f_{c,1} \cdot T_{r,0} \qquad (15).$$

With this configuration, the PRTs at all chirps (from m≥1) shall be calculated recursively via:

$$T_{r,m} = \frac{Q_c \cdot (m+1)}{f_{c,m+1}} \cdot \left(\sum_{j=1}^{m} T_{r,j-1}\right)^{-1} \tag{16}$$

Then, still with the linear center frequency shift in (1), the phase $\varphi_D(l,m)$ above can be re-formulated to

$$\varphi_D(l,m) = \frac{4\pi}{c}\left(f_{c,0}\cdot R + \Delta f_c \cdot R \cdot m + Q_c \cdot v \cdot m\right) \tag{17}$$

As can be seen from the equations, to compensate the second order phase term in slow-time signal of a stepped FMCW radar, the pulse repetition time (PRT) $T_r$ for each chirp in a radar cycle shall be varied. In particular, the product of the center frequency at the m-th chirp $f_{c,m}$ and the total time elapsed from start of the radar cycle to the start of the m-th chirp $\sum_{j=0}^{m} T_{r,j-1}$ shall be set equal to the product of a constant $Q_c$ and the chirp index m. This removes the quadratic phase change, - the second-order dependency.

Then applying slow-time DFT as shown in (11) will yield a peak in the spectrum:

$$m_{f,peak} \approx \frac{2}{c}\Delta f_c \cdot R + \frac{2}{c}Q_c \cdot v \tag{18}$$

Unlike a FMCW with constant center frequency $f_{c,m}$ across chirps, the frequency peak location in slow-time dimension is now dependent upon both range $R$ and velocity $v$.

The resulting $l_{f,peak}$ and $m_{fpeak}$ correspond to (will be equal to if multiplied by the number of frequency samples) integer-valued frequency bins out of FFT. Further refinement via spectral analysis methods such as MUSIC can produce more accurate estimates $f_{l,peak}$ and $f_{m,peak}$. These are normalized frequencies and are in the interval [0.0,1.0).

The effective fast-time bandwidth $B_e$ can be configured to a value that satisfies the requirement for the maximum unambiguous range $R_{max}$ in an application:

$$B_e = \frac{c}{2} \cdot \frac{T_c}{\Delta t \cdot R_{max}} \tag{19}$$

The range is then estimated as:

$$R \approx \frac{c}{2B_e}\frac{T_c}{\Delta t} \cdot f_{l,peak} \tag{20}$$

Due to the described method, the second-order dependency of the slow-time phase $\varphi_D(l,m)$ can be overcome. Thus, the detection of the radar sensor 1 regarding distance and distance resolution for moved objects is improved.

As already mentioned, the signal frequency of a target with $(R,v)$ has coupled range R and velocity $v$ in slow-time dimension:

$$\begin{cases} f_{peak,l} = \dfrac{2B_e}{c \cdot L}R + \dfrac{2f_{c,0}T}{c}v \\[2mm] f_{peak,m} = \dfrac{2\Delta f_c}{c}R + \dfrac{2}{c}v \end{cases} \tag{21}$$

However, due to the velocity unambiguous interval, the slow-time equation is actually

$$f_{peak,m} + k = \frac{2\Delta f_c}{c}R + \frac{2Q_c}{c}v \tag{22}$$

where $k$ is an integer representing the index of the ambiguous interval. But $k$ is also influenced by both $R$ and $v$.

In order to solve this issue, first $R$ is solved by ignoring the term $\dfrac{2f_{c,0}T}{c}v$ in (21).

Then, the solved $R$ value (because $f_{peak,l}$ is known) is substituted into (22) to remove the $R$ dependence in $k$.

Now, the remaining terms in $f_{peak,m}$ is due to $v$ alone. And the velocity ambiguity can be solved by e.g. combining two Radar cycles and using Chinese Reminder Theorem.

In other words, to make a velocity estimate, the slow-time signal frequency shall be shifted to remove the range dependency. This can be achieved by the following steps:

1. convert the range estimate into the corresponding slow-time frequency $F_r$;
2. modulo $F_r$ with the maximum unambiguous frequency in slow-time;
3. shift the slow-time peak frequency by removing / subtracting the above modulo result of $F_r$;
4. compensate the above shifted frequency by adding the maximum unambiguous frequency, if the above shifted frequency is moved outside of the slow-time unambiguous interval by the above step.

In detail, for slow-time dimension, denote the range $R$ induced frequency contribution as $F_r = \dfrac{2}{c}\Delta f_c \cdot R$ and velocity induced frequency term as $F_v = \dfrac{2}{c}Q_c \cdot v$. The (refined) normalized frequency estimates can be re-formulated as

$$f_{m,peak} = (F_r + F_v)\%1 = (F_r\%1 + F_v\%1)\%1 \qquad (23)$$

where % stands for the modulo operation.

By introducing an integer $k_r$, the outer most modulo at the right side of the above equation can be removed:

$$f_{m,peak} + k_r = F_r\%1 + F_v\%1 \qquad (24)$$

Consequently, the range independent frequency term $F_v'$ induced by velocity alone can be expressed as:

$$F_v' = F_v\%1 = f_{m,peak} - F_r\%1 + k_r \qquad (25)$$

where $k_r = 1$, when $f_{m,peak} - F_r\%1 < 0$, and $k_r = 0$ elsewise.

The range independent velocity will be calculated as:

$$v' = \frac{c}{2Q_c}F_v' \qquad (26)$$

which provides the same convention as traditional FMCW modulation with a constant center frequency across chirps.

Above formulation applies for the case, where the unambiguous interval is $[0, v_{max})$, where the maximum unambiguous velocity $v_{max}$ is computed by:

$$v_{max} = \frac{c}{2Q_c} \qquad (27)$$

In case the interested velocity in an application spans both negative and positive values, i.e., the unambiguous interval is $[-v_{max}/2, v_{max}/2)$, the above frequency estimate $f_{m,peak}$ can be updated with

$$f'_{m,peak} = \begin{cases} f_{m,peak}, & if\ 0 \leq f_{m,peak} < 0.5 \\ f_{m,peak} - 1, else \end{cases} \qquad (28)$$

And $k_r$ is modified to $k_r = 1$, when $f_{m,peak} - F_r\%1 < -0.5$, and $k_r = 0$ elsewise.

Hence, by providing the newly introduces integer $k_r$, a range independent velocity can be calculated, which simplifies subsequent processing for resolving velocity ambiguity.

By providing one method that removes second-order dependency on 'm' from the slow-time dimension phase term, as well as providing a method for range independent velocity estimation, a full solution to realize stepped FMCW modulation is achieved, which does not increase processing complexity, does not sacrifice SNR at high velocity, and does not complicate velocity ambiguity resolving, yet benefits from the high range resolution and high maximum detection distance under stepped FMCW modulation.

A stepped modulation means that the center frequency of the chirps is not the same for each chirp, but increases, preferably in a linear manner, as is shown in Figure 1.

Reference list

| | |
|---|---|
| 1 | radar sensor |
| 10 | transmitting means |
| 20 | receiving means |
| 30 | control unit |
| 40 | processing unit |
| $\tau_m$ | time delay for a target in the m-th chirp |
| $t_m$ | time at a chirp |
| $R$ | target radial range |
| $v$ | target radial (relative) velocity |
| $\Delta f_c$ | constant shift of carrier frequency, as shown in Figure 1 |
| $B_e$ | the effective fast-time bandwidth, |
| $T_c$ | the fast-time chirp duration, |
| $T_R$ | pulse repetition time (PRT), |
| $t$ | the fast-time within each chirp |
| $\Delta t$ | the ADC sampling interval |
| $f_{c,m}$ | center frequency of the m-th chirp. |
| $\varphi_R(l,m)$ | phase component related to the sweeping bandwidth at each chirp |
| $\varphi_D(l,m)$ | phase component resulted from carrier frequencies across chirps |
| R | distance R of an underlying target |
| $l$ | index for fast-time sample |
| L | total number of fast-time samples |
| $l_f$ | Frequency bin index in range / fast-time dimension |
| $l_{f,peak}$ | frequency peak bin in fast-time FFT output for a target in the field of view (FOV) |
| m | m-th chirp, i.e., slow-time sample |
| $m_{f,peak}$ | frequency peak bin in slow-time FFT output for a target in the FOV |
| $f_{m,peak}$ | fractional peak location in slow-time spectrum, a refined value of $m_{f,peak}$ |
| $f_{l,peak}$ | fractional peak location in fast-time spectrum, a refined value of $l_{f,peak}$ |
| L | total number of fast-time samples |
| $s(l,m)$ | signal |

**Claims**

1. An automotive radar sensor (1) comprising transmitting means (10), receiving means (20), and control units (30) and processing units (40), wherein:

   the transmitting means (10) emits a sequence of frequency modulated pulses, where at each pulse, its carrier frequency is configurable and set by the control unit (30), which also configures a time interval between any two consecutive pulses in the pulse sequence according to the carrier frequency being used,
   the receiving means (20) receives the signal reflected by objects in radar sensor's (1) surroundings, mixes the signal to baseband, and converts the signal to digital signal by ADC converters, and
   the processing unit (40) processes the digital signal by performing spectral analysis, and produces detections for the objects in the surroundings, wherein detection attributes are estimated by converting the results of spectral analysis to physical values by removing the range dependency in slow-time signal induced by the varying carrier frequency at each chirp in order to produce a range independent velocity attribute.

2. An automotive radar sensor (1) according to claim 1, wherein the dependency on the chirp index ($m$) of the second order phase term in slow-time phase component of the down-mixed returned radar signal is removed by varying the pulse repetition time ($T_{r,m}$) for each chirp in a radar cycle such that the product of the center frequency at the m-th chirp ($f_{c,m}$) and the total time elapsed from start of the radar cycle to the start of the m-th chirp ( $\sum_{j=0}^{m} T_{r,j-1}$ ) is set equal to the product of a constant ($Q_c$, where $Q_c = f_{c,1} \cdot T_{r,0}$) and the chirp index ($m$): leading to the slow-time phase component

$$\varphi_D(l, m) = \frac{4\pi}{c}\left(f_{c,0} \cdot R + \Delta f_c \cdot R \cdot m + Q_c \cdot v \cdot m\right)$$ ,

where c= light speed, R=range, $\Delta f_c$= constant shift of carrier frequency, m= chirp index, v= velocity, $f_{c,1}$=center frequency at 1st chirp , $T_{r,0}$ = pulse repetition time at 0th chirp.

3. An automotive radar sensor (1) according to claim 1 or 2, wherein an independent velocity estimate is done by the processing-unit by converting the range estimate into the corresponding slow-time frequency ($F_r$), calculating the maximum unambiguous frequency in slow-time by calculating $F_r$ modulo, shift the slow-time peak frequency by removing the above modulo result of $F_r$; and compensating the shifted frequency by adding the maximum unambiguous frequency, if the above shifted frequency is moved outside of the slow-time unambiguous interval by the above step.

4. Vehicle, comprising at least one radar sensor (1) according to claims 1, 2 or 3.

Fig. 1

Fig. 2

Fig. 3

Europäisches
Patentamt
European
Patent Office
Office européen
des brevets

# EUROPEAN SEARCH REPORT

**Application Number**

**EP 23 20 2987**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 796 038 A1 (APTIV TECH LTD [BB])<br>24 March 2021 (2021-03-24)<br>* abstract; figures 1-3, 6, 7, 9 *<br>* paragraphs [0003] - [0005], [0007] -<br>[0010], [0013], [0024] - [0028], [0033]<br>- [0036], [0045], [0050] *<br>----- | 1,4<br><br>2,3 | INV.<br>G01S13/58<br>G01S13/34<br>G01S13/931 |
| X,D | US 2023/296750 A1 (WINTERMANTEL MARKUS<br>[DE]) 21 September 2023 (2023-09-21)<br>* abstract; figures 4, 5 *<br>* paragraphs [0034], [0056] - [0066] *<br>----- | 1,4 | |
| X,D | US 11 199 617 B2 (BOSCH GMBH ROBERT [DE])<br>14 December 2021 (2021-12-14)<br>* column 4, line 48 - column 8, line 63 *<br>----- | 1,4 | |
| X | EP 4 202 489 A1 (APTIV TECH LTD [BB])<br>28 June 2023 (2023-06-28)<br>* paragraphs [0002] - [0005], [0011],<br>[0023], [0041], [0050] - [0054] *<br>----- | 1,4 | |

**TECHNICAL FIELDS SEARCHED (IPC)**

G01S

The present search report has been drawn up for all claims

| Place of search | Date of completion of the search | Examiner |
|---|---|---|
| Munich | 14 March 2024 | Lupo, Emanuela |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 20 2987**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-03-2024**

| Patent document cited in search report | Publication date | Patent family member(s) | Publication date |
|---|---|---|---|
| EP 3796038 A1 | 24-03-2021 | CN 112526504 A<br>EP 3796038 A1 | 19-03-2021<br>24-03-2021 |
| US 2023296750 A1 | 21-09-2023 | CN 116075745 A<br>CN 116194801 A<br>DE 102020210079 B3<br>EP 4193186 A1<br>JP 2023537329 A<br>JP 2023537900 A<br>US 2023296750 A1<br>US 2023314556 A1<br>WO 2022033638 A1<br>WO 2022033639 A1 | 05-05-2023<br>30-05-2023<br>19-08-2021<br>14-06-2023<br>31-08-2023<br>06-09-2023<br>21-09-2023<br>05-10-2023<br>17-02-2022<br>17-02-2022 |
| US 11199617 B2 | 14-12-2021 | CN 109923435 A<br>DE 102016221947 A1<br>EP 3538922 A1<br>JP 6725907 B2<br>JP 2019536011 A<br>US 2019265346 A1<br>WO 2018086783 A1 | 21-06-2019<br>09-05-2018<br>18-09-2019<br>22-07-2020<br>12-12-2019<br>29-08-2019<br>17-05-2018 |
| EP 4202489 A1 | 28-06-2023 | CN 116338593 A<br>EP 4202489 A1<br>US 2023194657 A1 | 27-06-2023<br>28-06-2023<br>22-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11199617 B2
- WO 2022033639 A1